# EUROPEAN PATENT APPLICATION

(11) **EP 1 558 011 A2**
(43) Date of publication of application: **27.07.2005**
(21) Application number: 04023229.0
(22) Date of filing: 29.09.2004
(51) Int. Cl.: H04M 3/42

(54) **Customisation of Ringback Tones**

(30) Priority: 22.01.2004 JP 2004014879
(71) Applicant: Dwango Co., Ltd., Tokyo 103-0007 (JP)
(72) Inventor: Kawakami, Nobuo, c/o Dwango Co., Ltd., Tokyo 103-0007 (JP); Sato, Daiki, c/o Dwango Co., Ltd., Tokyo 103-0007 (JP)
(74) Representative: Betten & Resch

(57) **Abstract**

A call control system which does not transmit a monotone ring-back tone to the calling party terminal but uses a calling period to dynamically provide content, such as, for example, music, voice and/or images, to a calling party in response to the identity of the calling party. Once profiles of users having the calling party terminal are registered in a mobile switching system, reproduction content composed of music, voice and/or images may be employed for the calling party terminal of the calling party, based on the profile of the calling party. As a result, the calling party may have an interesting time instead of having an uninteresting time until the called party answers the phone.

## Description

### BACKGROUND OF THE INVENTION

### Field of the Invention

The present invention relates to a call control system for calls to a portable terminal, such as, for example, a mobile phone, a method for controlling the call, and a call control program for the same.

### Description of the Related Art

In general, the prior art discloses that, when a calling party terminal makes a call, a predetermined call sound is sent from a switching center to the calling party during a ring-back tone period until the called party takes the call.

In recent years, during the above-mentioned ring-back tone period, a technique for transmitting music from the switching center to the calling party terminal or a technique for transmitting a voice, a character, and/or an image from the switching center to the calling party terminal has been disclosed in JP-A-2002-368882 and JP-T-2003-505937, respectively.

By way of example, there is a Melody Call (registered trademark) provided by NTT DoCoMo Co., in which a piece of music is registered to correspond to a specific phone number. The corresponding piece of music is then reproduced when a call from the registered phone number is received, such that the reproduced piece of music, instead of the ring-back tone, is provided to the calling party.

However, in the above-mentioned related art, a registration operation for associating the piece of music with the phone number of the calling party terminal must be performed by a user of the called party terminal, which results in a heavy load on the registration operation when the number of registration operations is increased. In addition, one piece of music corresponds to the calling party terminal so that the same piece of music is played on the calling party terminal every time until the called party receives the call, which in turn causes the piece of music to be played repetitively.

### SUMMARY OF THE INVENTION

Accordingly, it is an object of the present invention to provide a call control system capable of effectively using the calling period of the telephone to adjust and provide content such as, for example, music, to comply with the user of the calling party terminal in a simple and dynamic way instead of returning a monotonous ring-back tone to the calling party terminal when the call is given, a method for controlling the call, and a call control program for the same.

One aspect of the present invention is to provide a system for controlling the processing of a call from a terminal having a telephone function, including a content storage device that stores content information and an attribute of the content information; a profile storage device that coordinates stores a profile information, including the attribute of the content information that is arbitrarily set per user and a phone number of the user; a reader that reads out the profile information corresponding to the phone number of the calling party terminal by referring to the profile storage device in response to the call from the terminal; a content determiner that determines the content information corresponding to the attribute included in the profile information read out by the reader; and a supplier that reads out the content information determined by the content determiner from the content storage device and supplies the content information based on the read-out content information to the calling party terminal.

According to a feature of the call control system of the present invention, the supplier reproduces the content based on the read-out content information and transmits the reproduced content to the calling party terminal.

According to another feature of the call control system of the present invention, a user name may be included in the profile information, and the supplier may read out the user name of the calling party terminal from the profile storage device when the content information is reproduced, and synthesize the user name as a verbal voice.

According to a still further feature of the present invention, a user name may be included in the profile information, and the supplier may read out the user name of the calling party terminal from the profile storage device when the content information is reproduced, and compose the user name as a character image.

Still further, the content information may be reproduced as content in the terminal, and the supplier may transmit the read-out content information to the calling party terminal.

According to the present invention, a method for controlling a call from a terminal having a telephone function is provided. The method includes coordinating the storage of content information and an attribute of the content information in a memory while coordinating the storage of profile information that includes an attribute of the content information that is arbitrarily set for each user and a phone number of the user, referring to the memory in response to the call from the terminal, and reading out the profile information corresponding to the phone number of the calling party terminal. The method also includes determining the content information corresponding to the attribute included in the read-out profile information; and reading out the content information from the memory, and supplying the content based on the read-out content information to the calling party terminal.

According to the present invention, the content information may be reproduced based on the read out content information, and the corresponding reproduced content information may be transmitted to the calling party terminal.

Further, a user name may be included in the profile information, and the reading out of the content information may further include reading out the user name of the calling party terminal from the memory to synthesize the user name as a voice when the content information is reproduced.

According to the present invention, the user name may be included in the profile information, and the reading out of the content information may also include reading out the user name of the calling party terminal from the memory to compose the user name as a character image when the content information is reproduced.

It is noted that the content information may be capable of being reproduced as content in the terminal, and the read out content information may be transmitted to the calling party terminal.

According to another aspect of the present invention, a call control program is executed by a computer of a server within a mobile switching system. The call control program causes the computer to coordinate the storing of content information and an attribute of the content information in a memory while coordinating the storing of profile information, including an attribute of the content information that is arbitrarily set for each user and a phone number of the user. The call control program also causes the computer to refer to the memory in response to the call from the terminal, and to read out the profile information corresponding to the phone number of the calling party terminal. The call control program also causes the computer to determine the content information corresponding to the attribute included in the read out profile information. Further, the call control program also causes the computer to read out the determined content information from the memory, and supply the content information based on the read-out content information to the calling party terminal.

In this regard, reading out the content information may include reproducing the content based on the read out content information, and transmitting the read-out content to the calling party terminal.

Further, the user name may be included in the profile information, and the user name of the calling party terminal may be read from the memory to synthesize the user name as a voice.

Alternatively, the user name may be included in the profile information, and the user name of the calling party terminal may be read from the memory to compose the user name as a character image.

In addition, the content information may be reproduced as content information in the terminal, and the read-out content may be transmitted to the calling party terminal.

### BRIEF DESCRIPTION OF THE DRAWINGS

FIG. 1 is a schematic configuration diagram illustrating a call control system according to an embodiment of the present invention;
FIG. 2 is a block diagram showing one configuration of a mobile switching system according to the embodiment of the present invention;
FIGS. 3A to 3C are drawings that explain various record tables according to the embodiment of the present invention;
FIG. 4 is a block diagram showing one configuration of a mobile phone according to the embodiment of the present invention;
FIG. 5 is a diagram for explaining a screen transition of a mobile phone when a profile is set according to the embodiment of the present invention;
FIG. 6 is a flow chart for explaining an operation of registering a member according to the embodiment of the present invention; and
FIG. 7 is a flow chart for explaining a content reproducing operation when a call is made according to the embodiment of the present invention.

### DESCRIPTION OF THE PREFERRED EMBODIMENTS

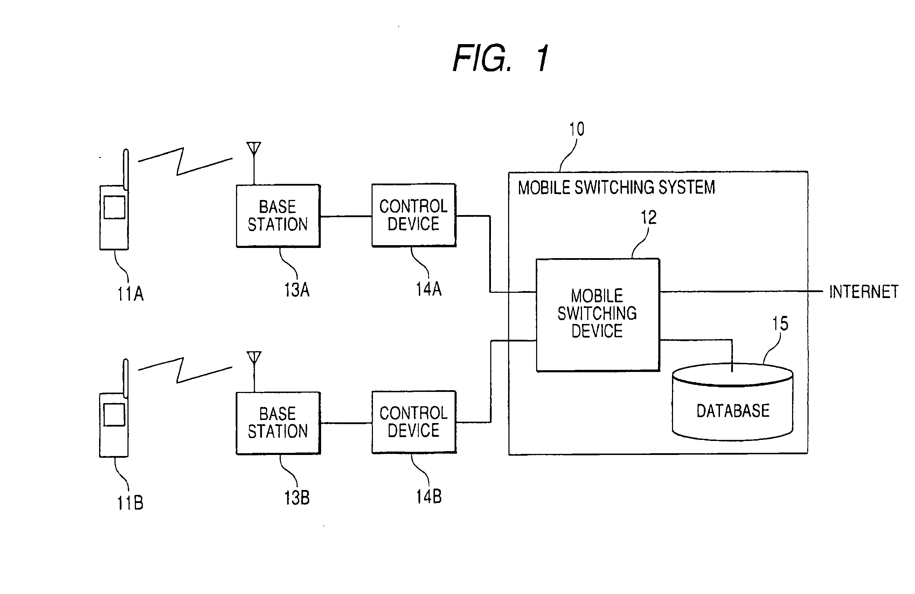

Hereinafter, an embodiment of the present invention will be described in detail with reference to the accompanying drawings. FIG. 1 is a schematic configuration diagram for explaining a call control system according to an embodiment of the present invention. A mobile communication system includes base stations 13A, 13B that perform a radio communication between mobile terminals, control devices 14A, 14B connected to the base stations 13A, 13B, and a mobile switching system 10 connected to the control devices. FIG. 1 shows a simple communication path between mobile phones 11A and 11B that are representative mobile terminals. The mobile switching system 10 shown in FIG. 1 includes the mobile switching device 12 connected to a database 15 and may be communicatively connected to an Internet (not labeled).

In the mobile communication path for the mobile phone 11A, a control device 14A for controlling a base station 13A is installed between the mobile switching device 12 and the base station 13A for performing a radio communication with the mobile phone 11A. Meanwhile, in the mobile communication path for the mobile phone 11B, a control device 14B for controlling a base station 13B is installed between the mobile switching device 12 and the base station 13B for performing a radio communication with the mobile phone 11B.

Content, such as, but not limited to, for example, music, sound, and/or images, in addition to subscriber information, is registered in the database 15, which may be updated through the Internet. The mobile switching device 12 has a function of referring to the database 15 during a ring-back tone period when a telephone call is made and providing content, such as, for example, music, sound, and/or images to the calling party terminal according to a profile of the calling party having the telephone.

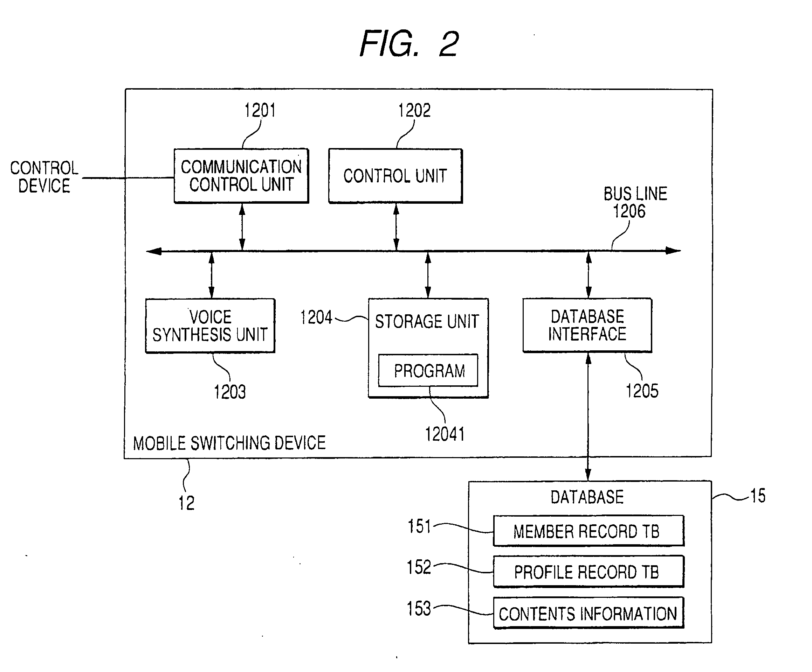

The mobile switching device 12 and the database 15 will be described in detail with reference to FIG. 2. FIG. 2 is a block diagram for showing one configuration of the mobile switching device 12 according to the embodiment of the present invention. In FIG. 2, the mobile switching device 12 includes a communication control unit 1201 that handles a bi-directional communication with the control devices 14A and 14B, a control unit 1202 having a CPU, ROM, RAM and so forth that is responsible for the overall control of the apparatus, a voice synthesis unit 1203 that generates (synthesizes) a voice from text character strings of voice provided from the database 15 and outputs them to the control device through the communication control unit 1201, a storage unit 1204 that stores a program 1204, including an application program and so forth in charge of processing the present apparatus for implementing the provision of content when the call is made from the mobile phone according to the embodiment of the present invention, a database interface 1205 that connects database 15 to the present apparatus, and a bus line 1206 that is provided for a bi-directional data communication among components of the present apparatus.

The control unit 1202 provides content, such as a ring back tone, to a corresponding terminal during the ring-back tone period in response to a call request from a portable terminal, such as, for example, mobile phones 11A and 11B. For example, when a user makes a call to the mobile phone 11B using the mobile phone 11A, during the ring-back tone period until the mobile phone 11B initiates communication with the mobile phone 11A, the control unit may dynamically adjust and provide content such as music, voice, images, and so forth, which complies with the profile of the user of the mobile phone 11A, as a substitute for the typical ring-back tone transmitted from the mobile switching device.

As shown in FIG. 2, the database 15 includes a member record table 151 that manages users who have registered for membership among users having mobile phones; a profile record table 152 that manages profiles of the registered users; and content information 153, such as, for example, music, voice, images, and so forth, that are registered in the database 15 and which may be updated. Hereinafter, a description will be made of these tables in detail.

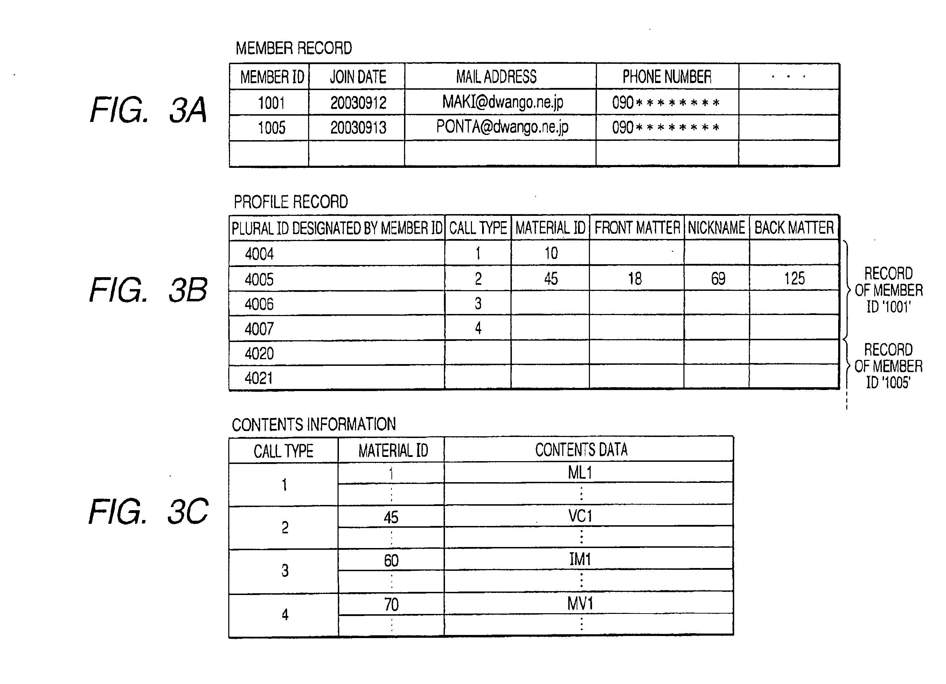

FIG. 3A shows the member record table 151. In the member record table 151, member information, such as, but not limited to, for example, 'member ID', 'join date', 'mail address', 'phone number' and so forth are registered for each user who wants to register for membership. In the examples of FIG. 3A, member information assigned to the user having member ID '1001' indicates a 'September 12, 2003' join date, a mail address of 'MAKI@dwango.ne.jp', and a phone number beginning with the number '090********. Member information of the user having the member ID '1005' consists of a 'September 13, 2003' join date, 'PONTA@dwango.ne.jp' as the mail address, and '090********' as the phone number.

FIG. 3B shows the profile record table 152. The profile for each member, including 'plural IDs determined by the member ID', 'call type', 'material ID', 'front matter', 'nickname', 'back matter' and so forth, is registered in the profile record table 152. In particular, four records are ensured per one member in the profile record table 152. For example, records 4004 to 4007 are assigned to users of the member IDs.

The 'call type' indicates the type of calling, and is set to a value corresponding to the type of calling. For example, '1' may represent a melody overlapped with chords or music using a CD tone source, '2' may represent a voice, '3' may represent an image, such as a still image or a moving image, and '4' may represent a movie mixed with music and/or video images. The 'material ID' may represent a value corresponding to the call type. For example, '10' may represent music of an artist named 'Aikawa Hachiya', and '45' may represent a voice of the artist 'Aikawa Hachiya'.

The 'front matter' is set to a value (e.g., '18') corresponding to the front matter (e.g., 'This is Hachiya') of a voice when '2' is set for the call type. The 'nickname' is set to a value (e.g., '69') corresponding to the nickname (e.g., Maki-chan) of the voice when '2' (voice) is set for the call type. The 'back matter' is set to a value (e.g., '125') corresponding to the back matter (e.g., 'How R U?') of the voice when '2' is set for the call type. These values may be freely determined in response to the type of the voice, and are not limited by these specific examples.

FIG. 3C shows the arrangement of content information. The content information stores the material ID and the content data in association with the call type. For example, a material ID ranging from 1 to 44 may be registered with respect to call type 1, a material ID ranging from 45 to 59 may be registered with respect to call type 2, a material ID ranging from 60 to 69 may be registered with respect to call type 3, and a material ID ranging from 70 to 80 may be registered with respect to call type 4.

In the disclosed embodiment, the content data includes music data ML1 when the material ID corresponds to 1 in call type 1. The content data includes voice data VC1 when the material ID corresponds to 45 in call type 2. The content data includes image data IM1 when the material ID corresponds to 60 in call type 3. The content data includes movie data MV1 when the material ID corresponds to 70 in call type 4. However, variations may be made without departing from the scope and/or spirit of the present invention.

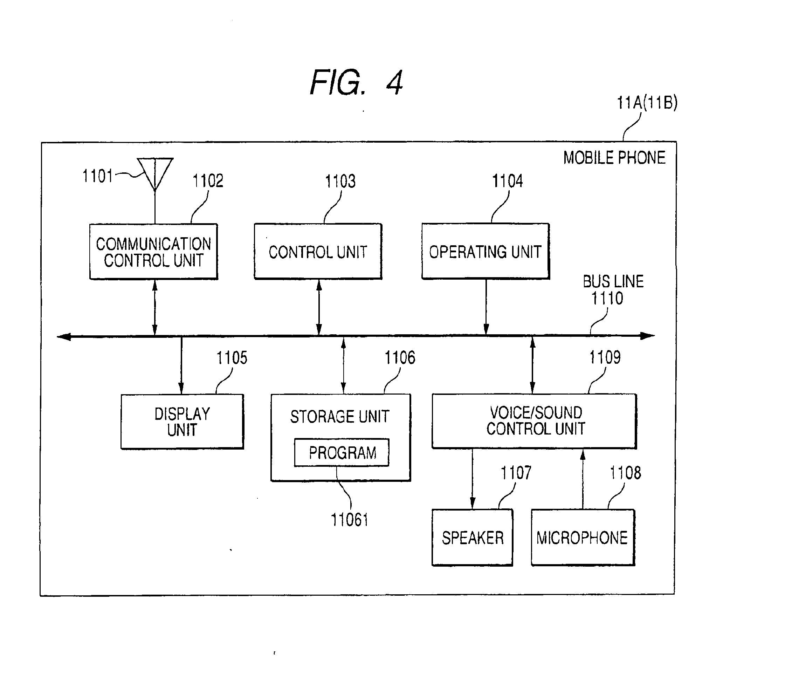

Next, mobile phones 11A and 11B will be described with respect to FIG. 4. FIG. 4 is a block diagram showing one configuration of the mobile phones 11A and 11B. In FIG. 4, each mobile phone 11A,11B includes an antenna 1101, a communication control unit 1102, a control unit 1103, an operating unit 1104, a display unit 1105, a storage unit 1106 that executes a program 11061, a voice/sound control unit 1109, a speaker 1107 and a microphone 1108. The communication control unit 1102 is connected to the antenna 1101 and performs a communication with a base station 11A, etc. through the antenna 1101. It is possible to implement communication such as voice conversation by the communication control unit 1102.

The control unit 1103 includes a CPU, ROM, RAM, and so forth, and performs overall control of the mobile phone 11A, 11B in accordance with the program 11061 stored in the storage unit 1106. For example, the control unit 1103 controls a web browsing using various portable application programs, for example, a JAVA application program (Registered Trademark of Sun Microsystems Co. in U.S.A.) . In addition, the control unit 1103 performs various processing when it receives an input from the operating unit 1104, and controls the display in response to the processing. The program 11061 is stored in an area of the storage unit 1106.

The operating unit 1104 includes keys for inputting phone numbers, addresses, and so forth, and keys for selecting linked pages. The display unit 1105, for example, displays the browser or forms a display screen when a telephone or mail function is used. The voice/sound control unit 1109 is connected to the speaker 1107 for outputting an incoming melody and/or a voice, and the microphone 1108 is for inputting the voice, and performs voice processing when the voice is received or transmitted on the mobile phone or the like.

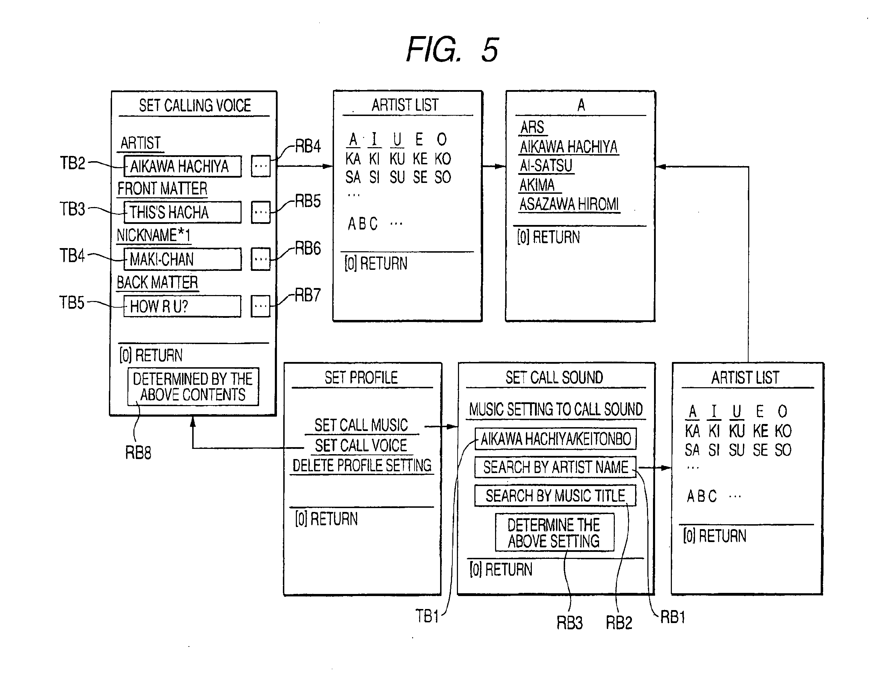

The operation of inputting a profile will be described with reference to FIG. 5. FIG. 5 is a diagram showing a screen transition of the mobile phone 11A, 11B when a member registration is performed. As mentioned above, the profile is input when the member registration is done. A member registration page (profile creation page) for inputting the profile is provided via communication with the mobile switching device 12. In addition, a detailed description of the operation of registering the member will be described later.

In FIG. 5, a 'set profile' is displayed as an initial screen in the member registration page. In the disclosed embodiment, the 'set profile' has three items, such as 'set call music', 'set call voice', and 'delete profile setting' . The 'set call music' option, for example, allows the content provided to the mobile phone 11A of the calling party to be music during the ring-back tone period until the mobile phone 11B of the called party answers the incoming call after the mobile phone 11A of the calling party places the call.

The 'set call voice' option, for example, allows the content provided to the mobile phone 11A of the calling party to be a voice during the ring-back tone period until the mobile phone 11B of the called party answers the phone after the mobile phone 11A of the calling party places the call. When the 'set call music' option is selected, the screen is changed to that of 'set call sound'.

On this screen, the user may search for his/her favorite songs, both by 'artist name' and by 'title'. When the 'artist name' is used, a radio button RB1 labeled 'search by artist name' is pressed. As a result, the 'set call sound' screen is changed to the 'artist list' screen, so that the artist may be searched in alphabetical order (e.g., a, e, i, o, u order) or an alphabetical order.

For example, when 'a' is selected, artist names starting with the first name of 'a' are displayed. For example, 'ARS', 'Aikawa Hachiya', 'AI-SATSU', 'AKIMA', 'Asazawa Hiromi' are displayed. A desired artist name among them is then selected. When 'Aikawa Hachiya' is selected and '[0] return' is pressed, the screen returns to the 'artist list' screen, and when '[0] return' is pressed in the 'artist list', the screen returns to the 'set call sound' screen. In this case, "Aikawa Hachiya/ITOTONBO", which represents the artist name and his song title, is displayed in a text box TB1 of the 'set call sound' screen. For example, a hit song or a new song of 'Aikawa Hachiya' is selected in this case.

A radio button RB2 labeled 'search by title' is pressed when the song needs to be searched by its title. As a result, the screen is changed to a 'Title list' screen (not shown), which allows the title to be searched in the order of the Japanese alphabet (a, i, u, e, o order) or in another alphabetical order. Accordingly, the music is set as reproducing content when a call is given. When this setting is done by the member having the member ID '1001' , a value shown in the '4004' record of FIG. 3B is set in the profile record. In other words, '1' is set for the 'call type' because the 'call type' is music, and '10' is set for the 'material ID' to indicate "Aikawa Hachiya/ITOTONBO". The 'front matter', 'nickname' , and 'back matter' are related to voice and are not associated with music, so that in this example they remain blank.

When the 'set call voice' option is selected in the 'set profile' screen, the screen is changed to the 'set call voice' screen. In this screen, the user sets the desired 'artist', 'front matter', 'nickname', and 'back matter'. Because the 'artist' may be searched, a radio button RB4 next to the text box TB2 of the 'artist' may be pressed. As a result, the 'set call voice' screen is changed to the 'artist list' screen, which allows the artist to be searched in the order of the Japanese alphabet (a, i, u, e, o order) or in another alphabetical order.

In this case, when 'a' is selected, artist names starting with the first name of 'a' are displayed, as mentioned above. For example, 'ARS', 'Aikawa Hachiya', 'AI-SATSU', 'AKIMA', and 'Asazawa Hiromi' are displayed. A desired artist name among them is then selected. When 'Aikawa Hachiya' option is selected and '[0] return' is selected, the screen returns to the 'Artist list' screen, and when '[0] return' is selected in the 'Artist list', the screen returns to the 'set call sound' screen. In this case, the artist name 'Aikawa Hachiya' is displayed in a text box TB2 of the 'set call sound' screen.

After the 'Artist' is selected, a 'front matter' is set. In this setting, a radio button RB5 next to the text box TB3 of the 'front matter' is pressed, so that the screen is changed to a 'front matter list' screen (not shown) . When the phrase 'This is...' is selected and returned to the 'set call voice' screen, 'This is Hachiya' is displayed on the text box TB3 of the 'front matter'.

After the 'front matter' is set, a 'nickname' is set. In this setting, a radio button RB6 next to the text box TB4 of the 'nickname' is pressed, so that the screen is changed to a 'nickname' screen (not shown) . In this case, the nickname 'Makizzang' of the user is selected and returned to the 'set call voice' screen. Accordingly, 'Maki-chan' is displayed in the text box TB4 of the 'nickname'.

After the 'nickname' is set, a 'back matter' is set. In this setting, a radio button RB7 next to the text box TB5 of the 'back matter' is pressed, so that the screen is changed to a 'back matter' screen (not shown). In this case, 'How R U?' is selected and returned to the 'set call voice' screen, so that 'How R U?' is displayed in the text box TB5 of the 'back matter'.

As such, the voice is determined as reproducing content when a call is made. When this setting is done by the user having member ID '1001', a value such as '4005' in FIG. 3B is set in the profile record. In other words, a value '2' is set for the 'call type' because the 'call type' is voice, and '45' indicates "the voice of Aikawa Hachiya" is set for the 'material ID'. In addition, '18' indicates 'This is Hachiya' is set for the 'front matter', '69' indicates 'Maki-chan' is set for the 'nickname', and 'How R U?' is set for the 'back matter' .

An option labeled 'delete profile setting' may be selected in the set profile screen. In addition, the 'front matter', the 'nickname', and the 'back matter' were set to the set pattern text selected, however, they may be set to any sentence input.

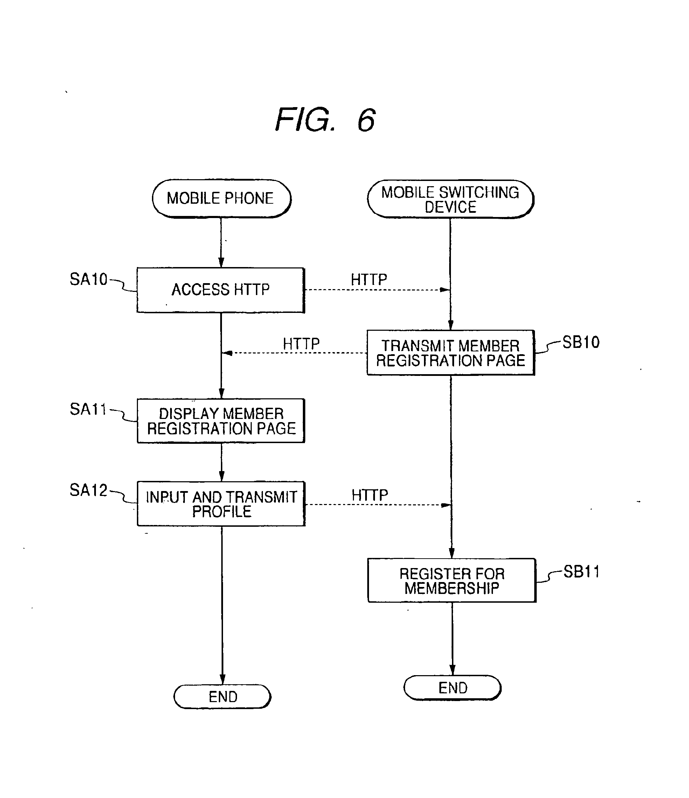

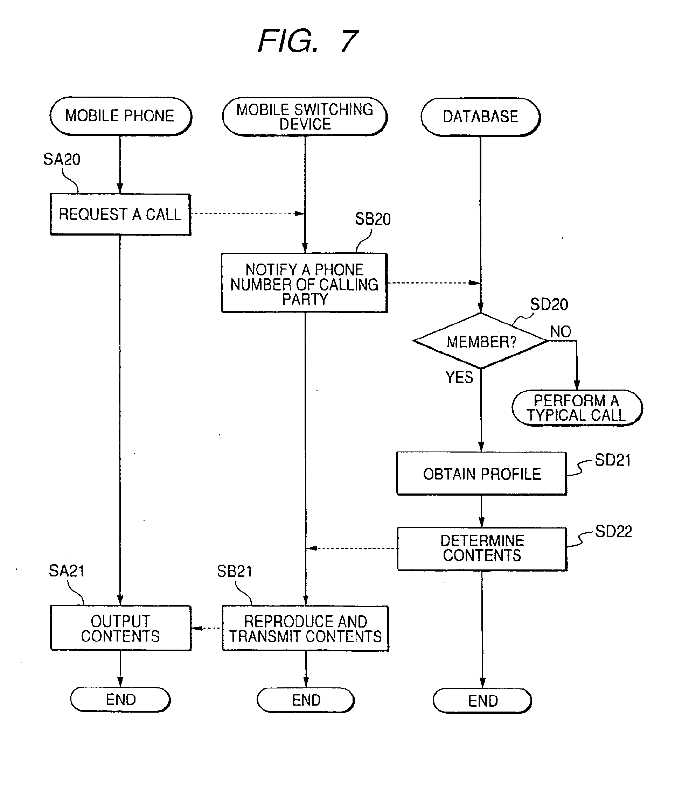

The member registration operation will now be described in detail with reference to FIGs. 6 and 7. FIG. 6 is a flow chart for explaining an operation between the mobile phone and the mobile switching system when a member is registered, and FIG. 7 is a flow chart for explaining a content reproducing operation when a call is given.

Hereinafter, a description will be made on the example of the mobile phone 11A. In FIG. 6, when a JAVA application program (Registered Trademark of Sun Microsystems Co. in U.S.A.) is executed, the mobile phone 11A is started up by the operation of the user, access is established from the mobile phone 11A to the mobile switching device 12 using Hyper Text Transfer Protocol (HTTP) (step SA10) . In step SA10, a member registration is requested to the mobile switching device 12 from the mobile phone 11A.

The mobile switching device 12 produces the member registration page in response to the access request from the mobile phone 11A, and the member registration page is transmitted to the mobile phone 11A using HTTP (step SB10). The member registration page transmitted from the mobile switching device 12 is then displayed on the screen of the mobile phone 11A (step SA11). In response to an operation by the user, the profile is input, based on the member registration page displayed on the screen of the mobile phone 11A.

After the profile is input by the user, using the JAVA application program of the mobile phone 11A, the profile input by the user is transmitted using HTTP (step SA12). In the mobile switching device 12, the user profile of the mobile phone 11A is registered in the profile record table 152 (FIG. 2) and the member record table 151 (FIG. 2) of the database 15 (step SB11).

In other words, when the user is, for example, 'MAKI', '1001' as the 'member ID', '20030912' as the 'join date', and 'MAKI@dwango.ne.jp ' as the 'mail address' are registered in the member record table 151, respectively as described above with reference to FIGS. 3A to 3C. In addition, when the user is, for example, 'PONTA', '1005' as the 'member ID', '20030913' as the 'join date', and 'PONTA@dwango.ne.jp' as the 'mail address' are registered in the member record table 151, respectively.

In addition, `1' as the 'call type', and '10' as the 'material ID' are set in the record '4004' as the 'plural ID designated by member ID' of the profile record table 152, respectively. In addition, '2' as the 'call type', '45' as the 'material ID', '18' as the 'front matter', '69' as the 'nickname', and '125' as the 'back matter' are set in the record '4005' as the 'plural ID designated by member ID', respectively. In addition, in the member registration of step SB11, for example, Structured Query Language (SQL) is used for handling the database.

An operation when the call sound is output will now be described with reference to FIG. 7. For the present discussion, it is assumed that the call is placed from the mobile phone 11A to the mobile phone 11B. In FIG. 7, when a call operation is initiated from the mobile phone 11A to the mobile phone 11B (step SA20), the phone number of the mobile phone 11A and the called phone number are identified in the mobile switching device 12, and the database 15 is notified of the phone number of the mobile phone 11A of the calling party (step SB20).

It is determined whether the user of the mobile phone 11A is a member by means of the phone number of the mobile phone 11A notified from the mobile switching device 12 in the database 15 (step SD20). When the user is not a member, a typical call sound is processed during the ring-back tone period. In this case, the typical call sound is output from the speaker 1107 of the mobile phone 11A.

On the other hand, when the user of the mobile phone 11A is a member, the profile of the member is obtained from the database 15 (step SD21), and the corresponding content is determined based on the profile (step SD22) . For example, when the member is 'MAKI' and the content to be reproduced during outgoing calls is music, '1' as the call type and '10' as the material ID are obtained as the profile.

In the mobile switching device 12, when content data determined based on the profile of the member are obtained from the database 15, the music is reproduced based on the content data, namely, music data, and the reproduced music is transmitted to the mobile phone 11A (step SB21) . Accordingly, the music of 'Aikawa Hachiya' is output from the speaker 1107 of the mobile phone 11A (step SA21) . This music is repeatedly output until the user of the mobile phone 11B answers the phone.

Similarly, when the content to be reproduced during outgoing calls is a voice, the call type of '2', the material ID of '45', the front matter of '18', the nickname of '69', and the back matter of '125' are obtained as the profile, and the voice of 'Aikawa Hachiya' saying 'This is Hachiya. Makiz-chan, How R U?' is output from the speaker 1107 of the mobile phone 11A. This voice is repeatedly output until the user of the mobile phone 11B answers the phone.

As mentioned above, in accordance with the embodiments of the present invention, a monotonous ring-back tone is not transmitted to the calling party terminal (e.g., the mobile phone of the calling party) when a call is made, but the calling period may be effectively used to dynamically change and provide content such as music, voice, images, and so forth to the calling party in response to the user of the calling party (e.g., the mobile phone of the calling party).

As such, in accordance with the call control system of the present embodiments, once profiles of users having a mobile phone are registered in the mobile switching system 10, reproduction content composed of music, voice, images and so forth may be employed for the mobile phone of the calling party based on the profile of the calling party when the call is made by the mobile phone. As a result, the calling party may have an interesting time instead of having an uninteresting time until the called party answers the phone. In addition, it is possible to listen to new songs of his/her favorite artist, which leads to a sale promotion of CD, MD, cassette player, and so forth.

In the above-mentioned embodiments, music and voice were exemplified as the call reproduced content. However, a movie composed with music, video images, and/or images, such as still images or moving images, are used as the call reproduced content.

In addition, when the set pattern text is set to be selected for the voice, any desired sentences may be made and registered in the mobile switching device 12 as text, and the mobile switching device 12 may also compose the text with the voice as the reproduced content.

Furthermore, the mobile switching device may freely make the sentences based on the user profile and information from a predetermined music site. This may also be applied to the image data. Accordingly, the user may listen to and enjoy any melodies or voices that he/she did not set.

The present invention may be applied to whole mobile communication systems for handling mobile terminals such as a mobile phone.

In accordance with the present invention, the call control system does not transmit an uninteresting ring-back tone to the calling party terminal, but, instead effectively uses the calling period to dynamically change and provide content such as music, voice, images, and so forth to the calling party in response to the identity of the calling party.

While the invention has been particularly shown and described with reference to a preferred embodiment thereof, it is understood by those skilled in the art that various alterations in form and/or detail may be made without departing from the spirit and/or scope of the invention, as defined by the following claims. Although the invention has been described with reference to the particular means, materials and embodiments, it is to be understood that the invention is not limited to the particulars disclosed herein, but extends to all equivalents within the scope of the claims.

## Claims

1. A call control system for controlling processing of a call from a terminal having a telephone function, comprising:
a content storage device that stores content information and an attribute of the content information;
a profile storage device that coordinates the storage of profile information including an attribute of content information that is arbitrarily set per user to a phone number of the user;
a reader that reads out the profile information corresponding to the phone number of the calling party terminal by referring to the profile storage device in response to a call from the terminal;
a content determiner that determines content information corresponding to the attribute included in the profile information read out by the reader; and
a supplier that reads out the content information determined by the content determiner from the content storage device and supplies content based on the read out content information to the calling party terminal.

2. The call control system of claim 1, wherein said supplier reproduces the content based on the read out content information, and transmits the reproduced content to the calling party terminal.

3. The call control system of claim 1, wherein a user name is included in said profile information, and said supplier reads out the user name of the calling party terminal from said profile storage device when content is reproduced, and synthesizes the user name as a voice.

4. The call control system of claim 1, wherein a user name is included in said profile information, and said supplier reads out the user name of the calling party terminal from said profile storage device when content is reproduced, and composes the user name as a character image.

5. The call control system of claim 1, wherein the content information is reproduced as content in the terminal, and said supplier transmits the read out content information to the calling party terminal.

6. A method for controlling a call of a terminal having a telephone function, comprising:
coordinating the storage of content information and an attribute of the content information in a memory while coordinating the storage of profile information, including an attribute of the content information that is arbitrarily set for each user and a phone number of the user, referring to the memory in response to a call from the terminal, and reading out the profile information corresponding to the phone number of a calling party terminal;
determining content information corresponding to the attribute included in the read out profile information; and
reading out the determined content information from the memory, and supplying the content based on the read-out content information to the calling party terminal.

7. The method of claim 6, wherein reading out the determined content information from the memory comprises reproducing the content based on the read out content information and transmitting the corresponding reproduced content to the calling party terminal.

8. The method of claim 6, further comprising including a user name in the profile information, the user name of the calling party terminal being read from the memory to synthesize the user name as a voice when the content is reproduced.

9. The method of claim 6, further comprising including a user name in the profile information, the user name of a calling party terminal being read from the memory to compose the user name as a character image when the content is reproduced.

10. The method of claim 6, further comprising reproducing content information as content in the terminal, the reading out the determined content information comprising transmitting the read out content information to the calling party terminal.

11. A call control program executable by a computer of a server within a mobile switching system, the program causing the computer to carry out a method according to one of claims 6 to 10.
